# EUROPEAN PATENT APPLICATION

(11) **EP 1 260 748 A1**
(43) Date of publication of application: **27.11.2002**
(21) Application number: 02425291.8
(22) Date of filing: 10.05.2002
(51) Int. Cl.: F16L 11/15

(54) **Corrugated polyethylene union for building and sewerage pipes**

(30) Priority: 14.05.2001 IT AN20010012
(71) Applicant: Sirci - S.r.l., 06024 Gubbio, PG (IT)
(72) Inventor: Pisoni, Stefano, 06024 Gubbio, PG (IT)
(74) Representative: Baldi, Claudio

(57) **Abstract**

Polyethylene union for building and sewerage pipes characterised by the fact that a regular series of preferably hollow annular ribs providing higher sturdiness and higher flexion rigidity is incorporated on the external surface during moulding.

## Description

The present patent application relates to a corrugated polyethylene union for building and sewerage pipes.

The union of the invention has been devised to eliminate a series of inconveniences that are typical of the traditional technology used for the realisation of pipes in the building or sewerage sectors.

The specific advantages of the union, which can be realised in any constructive version, will appear more evident after a short description of the prior art.

Up to a few years ago PVC tubes were used for building and sewerage applications, both for linear sections and connection points between linear sections.

More recently, the toxicity of PVC has been pointed out, and in particular, the risks of environmental pollution deriving from laying PVC pipes underground for the realisation of sewerage.

For this reason the experts of the art have been trying to eliminate the use of PVC tubes by replacing them with polyethylene (PE) pipes.

While no difficulties have been met in the realisation of linear sections of PE pipes, great problems have been encountered in the realisation of PE unions.

In particular, one of the negative aspects in the use of PE is represented by the fact that the material is affected by stretching and shrinking. PE pipes are quite easy to machine, but they maintain a strong "mechanical memory" that, in the presence of modest heating, as the heat produced by sunlight in summer, tends to cancel mechanical deformation.

Experimental tests have shown that, when used for curved sections or unions, traditional PE tubes tend to have a highly variable internal diameter, thus impairing the quality and stability of the connection with PE linear sections.

In view of the above, pipelines usually have a mixed structure and are obtained by connecting PE linear sections with PVC unions, which are more rigid and structurally stable.

Connections, however, require great caution, especially in case of sewerage, because the connection between PE linear sections and PVC unions tend to cause a loss of tightness and specific gaskets must be provided.

In view of the above it appears evident that the current technique used to realise pipelines with "mixed" structure, that is with PE linear sections and PVC unions, is detrimental for the realisation of urban pipelines, where pipes have a curved direction and multiple unions between PE linear sections and PVC unions are required.

The purpose of the present invention is to realise a PE moulded union, with any possible shape, characterised by great structural stability, meaning minimum distortion, with special reference to the internal diameter also in the presence of curving angles.

This has been obtained by externally providing PE unions with a regular series of annular ribs capable of giving satisfactory structural stability, preferably intersecting with longitudinal ribs.

Practically speaking, the PE union of the invention - apart from being appreciated for the reduced environmental impact - is totally compatible with traditional PE linear sections under the structural aspect. This makes connection much easier and at the same time guarantees excellent tightness properties along the entire sewerage.

It must be noted that the union of the invention is highly appreciated also for its sturdiness and duration. The presence of the external ribs guarantees considerable flexion rigidity and prevents any risk of dangerous structural yielding that could create a gap in the connection points with linear pipes, thus resulting in lower tightness.

For major clarity the description of the invention continues with reference to the enclosed drawings, which are intended for purposes of illustration and not in a limiting sense, whereby:

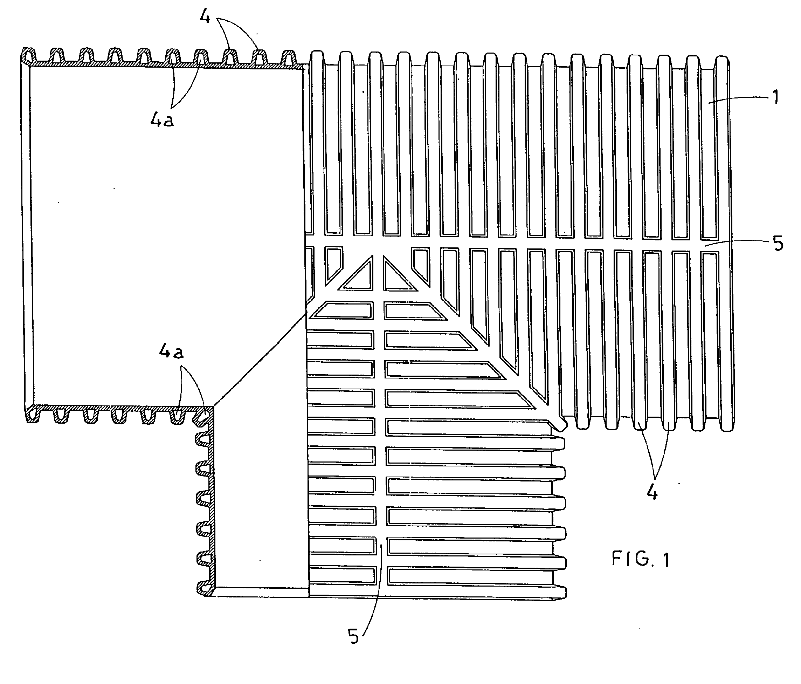

- Figure 1 is a partial cross-section of a T-shaped union realised according to the invention;

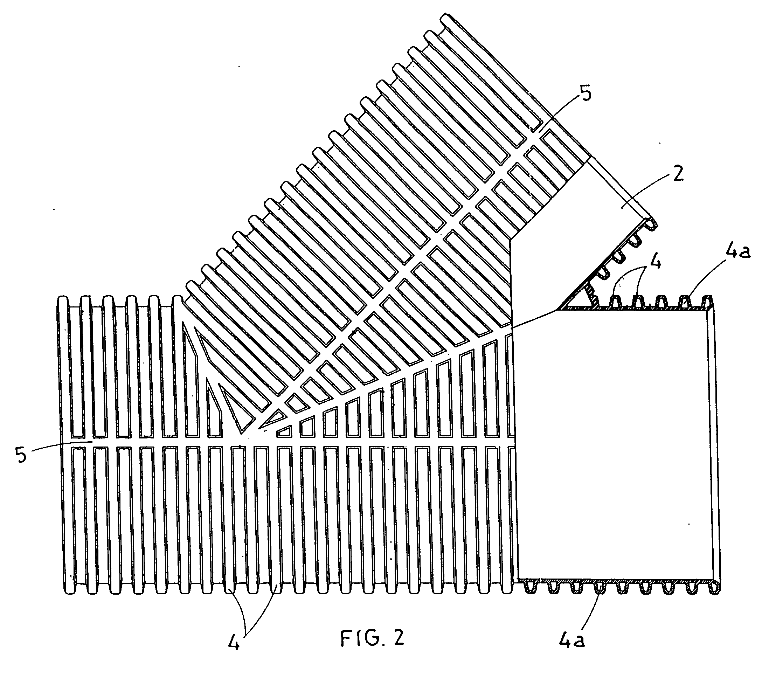

- Figure 2 is a partial cross-section of a V-shaped union realised according to the invention;

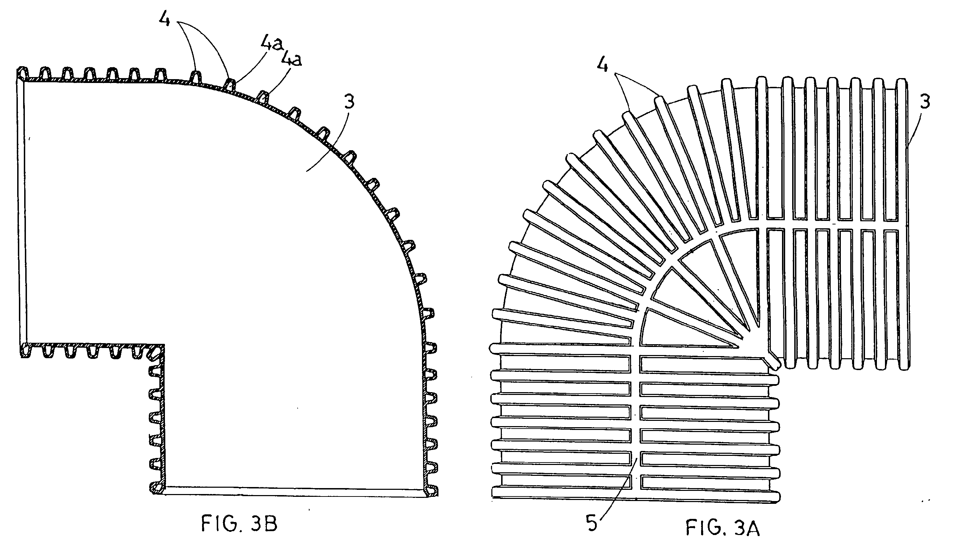

- Figures 3A and 3B are respectively a view and a cross-section of a 90° curved tubular union realised according to the invention.

As mentioned earlier, the figures show three alternative versions of the union of the invention, respectively a T-shaped version (1), a V-shaped version (2) and a 90° curved version (3). These are three possible embodiments of the invention, which basically relates to a PE tubular union (1, 2 or 3) characterised by the fact that it externally incorporates a regular series of annular ribs (4), each of them provided with internal longitudinal cavity (4a), being the series of annular ribs (4) obtained during moulding.

In the manufactures shown in the aforementioned figures, the annular ribs (4) intersect with one or more ribs (5) with basically longitudinal direction to provide higher sturdiness and rigidity.

Regardless of the specific contents of the enclosed drawings, it must be noted that the same inventive idea of this patent application can be advantageously used to realise unions with any type of profile or constructive shape.

## Claims

1. Polyethylene union for building and sewerage pipes, **characterised by** the fact that it externally incorporates a regular series of annular ribs (4) realised during moulding.

2. Polyethylene union for building and sewerage pipes according to claim 1, **characterised by** the fact that the annular ribs (4) have an internal longitudinal cavity (4a).

3. Polyethylene union for building and sewerage pipes according to claim 1, **characterised by** the fact that the external annular ribs (4) intersect with one or more ribs (5) with basically longitudinal direction.
